**Europäisches Patentamt**

**European Patent Office**

**Office européen des brevets**

(19)

(11) Numéro de publication: **0 296 442**
**B1**

(12) **FASCICULE DE BREVET EUROPEEN**

(45) Date de publication du fascicule du brevet:
**12.12.90**

(21) Numéro de dépôt: **88109381.9**

(22) Date de dépôt: **13.06.88**

(51) Int. Cl.⁵: **F16K 3/02**, F16K 3/20,
F16K 51/02

(54) Vanne pour enceinte a vide.

(30) Priorité: **16.06.87 FR 8708363**

(43) Date de publication de la demande:
**28.12.88 Bulletin 88/52**

(45) Mention de la délivrance du brevet:
**12.12.90 Bulletin 90/50**

(84) Etats contractants désignés:
**AT BE CH DE ES FR GB GR IT LI LU NL SE**

(56) Documents cités:
**DE-A- 2 705 060**
**FR-A- 1 327 595**
**FR-A- 1 538 390**
**FR-A- 2 283 375**
**US-A- 1 727 677**
**US-A- 3 254 873**
**US-A- 3 828 816**

(73) Titulaire: **ALCATEL CIT, 12 Rue de la Baume,
F-75008 Paris(FR)**

(72) Inventeur: **Frindel, Sébastien, 27 route de Pringy Annecy
le Vieux, F-74000 Annecy(FR)**
Inventeur: **Mimeur, Jacques, Chemin des Barattes,
F-74290 Veyrier du Lac(FR)**

(74) Mandataire: **Weinmiller, Jürgen et al,
Lennéstrasse 9 Postfach 24, D-8133 Feldafing(DE)**

ACTORUM AG

## Description

La présente invention concerne une vanne pour enceinte à vide.

On connaît les vannes à membranes dont l'obturation est constitué par un ruban mobile dans son propre plan et comportant une ouverture. Ce type de vanne présente l'avantage de permettre l'ouverture totale de la veine fluide, comme les vannes à tiroir mais avec un encombrement plus faible.

Le document US-A-3.828.816 décrit un tel type de vanne dans lequel l'étanchéité à la fermeture est effectuée par la différence de pression existant entre les deux côtés de l'obturateur.

Cependant, dans bien des applications, l'étanchéité réalisée n'est pas suffisante.

La présente invention a pour but de réaliser une vanne de type à ruban, comportant un système d'étanchéité efficace, tout en maintenant un très faible encombrement.

L'invention a ainsi pour objet une vanne pour enceinte à vide comprenant un corps de vanne, creux d'axe Δ, et débouchant à l'extérieur par deux extrémités opposées du corps de vanne, permettant de l'introduire dans un circuit de pompage, ledit corps de vanne étant muni en son intérieur d'un moyen d'obturation constitué par une bande, mobile dans son propre plan, qui est perpendiculaire à l'axe Δ, ladite bande étant munie d'au moins une ouverture et étant associée à deux tambours d'enroulement-déroulement munis de moyens moteurs, caractérisée en ce que ledit corps de vanne est en outre muni de moyens d'étanchéité situés entre les deux tambours et comprenant un joint fixe solidaire du corps de vanne et situé d'un premier côté par rapport à la bande et d'un système de joint mobile parallèlement à l'axe Δ, situé de l'autre côté de la bande par rapport au joint fixe, et ledit système de joint mobile comprend une pluralité de billes maintenues espacées les unes des autres sur une circonférence par une cage mobile en rotation, l'ensemble billes et cage étant disposé entre un anneau de serrage mobile axialement et muni d'empreintes coniques pour les billes et une partie plane du corps de vanne munie également d'empreintes coniques pour les billes, ladite cage étant associée à des moyens permettant de l'entraîner en rotation d'un angle α, l'anneau de serrage étant mobile par coulissement axial d'une manière étanche le long d'une portée cylindrique interne audit corps de vanne.

Selon une autre caractéristique, le corps de vanne comprend, situé du même côté que ledit joint fixe par rapport à la bande, un anneau de rappel soumis à l'effort d'un ressort de rappel dirigé vers ladite bande.

L'invention va maintenant être décrite en se référant au dessin annexé dans lequel :

Les figures 1 et 2 représentent schématiquement une vanne selon l'invention.

La figure 3 est une vue partielle, agrandie et en coupe montrant le détail de la vanne représentée figure 1 et 2.

La vanne selon l'invention peut s'appliquer pour la réalisation de vannes extra plates destinées à l'instrumentation dans les techniques utilisant des faisceaux sous vide.

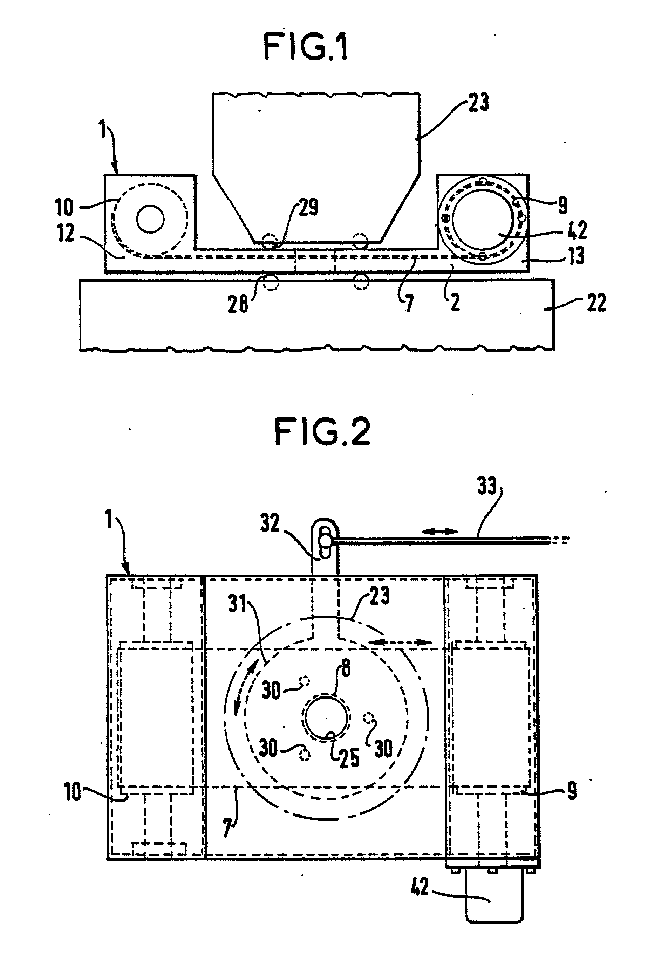

Les figures 1 et 2 sont schématiques. Sur la figure 1, on voit la vanne placée entre une enceinte à vide 22 et un appareil 23 tel que, par exemple, un générateur de faisceaux. La vanne, dans la zone de l'appareil 23 est extra-plate.

En se référant à l'ensemble des trois figures, la vanne représentée comporte un corps de vanne 1, creux, d'axe Δ. La cavité interne 2 du corps de vanne débouche à l'extérieur par deux ouvertures d'extrémité 24 et 25 se faisant face et sur les bords desquelles viennent s'appliquer des raccords étanches à soufflets 26 et 27 munis de joints 28 et 29 liés respectivement à l'appareil 23 et à l'enceinte à vide 22.

L'obturateur, situé à l'intérieur du corps de vanne, entre les deux ouvertures 24 et 25, est constitué par une bande d'obturation 7.

Cette bande d'obturation peut être constituée par un feuillard métallique ou aussi par une bande en une matière synthétique imperméable ou encore par une bande d'une matière synthétique recouverte d'un dépôt métallique. On peut encore utiliser des lamelles articulées épaisses, fixées sur les bandes minces dans le cas de grandes sections de passage.

Cette bande d'obturation 7 comporte une ouverture circulaire 8 dont la dimension est légèrement supérieure à la dimension des ouvertures 24 et 25 si l'on souhaite réaliser une vanne à ouverture totale. Pour certaines applications, on peut désirer une vanne dont l'ouverture est à conductance variable en fonction de la position de la bande par rapport à l'axe Δ. Dans ce dernier cas, on pourra réaliser des bandes comportant plusieurs ouvertures, de forme et de section diverses.

La bande d'obturation 7 est mobile dans son propre plan, c'est-à-dire perpendiculairement à l'axe Δ. Pour cela, elle est liée à chacune de ses extrémités à un tambour. On a donc deux tambours 9 et 10 situés respectivement dans le corps de vanne de part et d'autre de la section interne 11 de passage du fluide. Ces tambours 9 et 10 assurent l'enroulement et le déroulement de la bande, permettant de faire coïncider le centre de l'ouverture 8 avec l'axe Δ ou au contraire de déplacer la bande de manière à obturer la section de passage 11. Ces tambours d'enroulement-déroulement sont munis de moyens moteurs non représentés.

Les tambours 9 et 10 sont respectivement situés dans des chambres 12 et 13 de la cavité générale 2 du corps de vanne 1. Comme on le voit sur les figures, le corps de vanne 1 est plat et allongé, les chambres 12 et 13 contenant les tambours 9 et 10 étant reportées au-delà de l'encombrement de l'appareil 23.

Entre les deux chambres 12 et 13, le corps de vanne comporte des moyens d'étanchéité pouvant venir s'appliquer de part et d'autre de la bande d'obturation 7 et assurant d'une part, lorsque la vanne est en position d'obturation, l'étanchéité entre les deux ouvertures d'extrémités du corps de vanne, la section 11 étant bouchée et les moyens d'étanchéité appliqués et d'autre part, si on le désire, par application des moyens d'étanchéité, l'étanchéité interne de la vanne, c'est-à-dire de la partie 11 de la cavité générale 2 de la vanne par rapport aux chambres 12 et 13 en position ouverte de la vanne lorsque l'ouverture 8 de la bande est dans une position n'assurant pas l'obturation du conduit 11, c'est-à-dire lorsque l'on est en cours de pompage. Cette dernière possibilité permet de pomper séparément les chambres 12 et 13.

A cet effet le corps de vanne comporte un orifice 14 permettant de raccorder une pompe.

Les moyens d'étanchéité mentionnés ci-dessus comprennent un joint fixe 15 lié au corps de vanne et situé d'un premier côté par rapport à la bande d'obturation 7, et un système de joint mobile qui peut se déplacer parallèlement à l'axe Δ. Ce système de joint mobile est situé de l'autre côté de la bande d'obturation 7 par rapport au joint fixe 15 et il comprend une pluralité de billes 30, par exemple trois, maintenues espacées à 120° les unes des autres sur une circonférence, par le moyen d'une cage 31. Cette cage 31 est mobile en rotation et comporte un levier 32 (voir fig.2) relié à une tige de manoeuvre 33.

Les billes 30 et la cage 31 sont placées entre un anneau de serrage 34, muni d'empreintes coniques 35 pour le positionnement des billes et une partie plate 36 du corps de vanne 1 portant également des empreintes coniques 37 pour les billes.

Les empreintes coniques 35 sont situées en face des empreintes coniques 37. Lorsque la cage 31 est en position telle que les billes 30 sont positionnées dans les empreintes 35 et 37, l'anneau de serrage 34 n'est pas plaqué contre le joint fixe 15 et un anneau de rappel 38 muni d'un ressort de rappel 39 écarte même l'anneau de serrage 34 du joint fixe 15.

Lors du déplacement de la bande d'obturation 7, celle-ci est donc légèrement pincée entre l'anneau de serrage 34 et l'anneau de rappel 38. Cependant, l'effort du ressort de rappel 39 est choisi de façon à ce que ce pincement soit faible.

Par la rotation d'un angle α de la cage 31, celle-ci entraîne les billes hors des empreintes coniques 35 et 37 ce qui a pour effet, comme on le voit sur la demi-partie gauche de la figure, de soulever l'anneau de serrage 34 et d'appliquer la bande 7 contre le joint fixe 15.

Lors des déplacements de l'anneau de serrage 34, il coulisse axialement d'une manière étanche le long d'une portée cylindrique 40 interne au corps de vanne 1. Un joint d'étanchéité frottant, non représenté, peut être disposé entre l'anneau 34 et la partie 40. Un ergot 41 empêche la rotation de l'anneau de serrage 34.

Sur la figure 2, on a représenté en 42 un moteur d'entraînement du tambour 9.

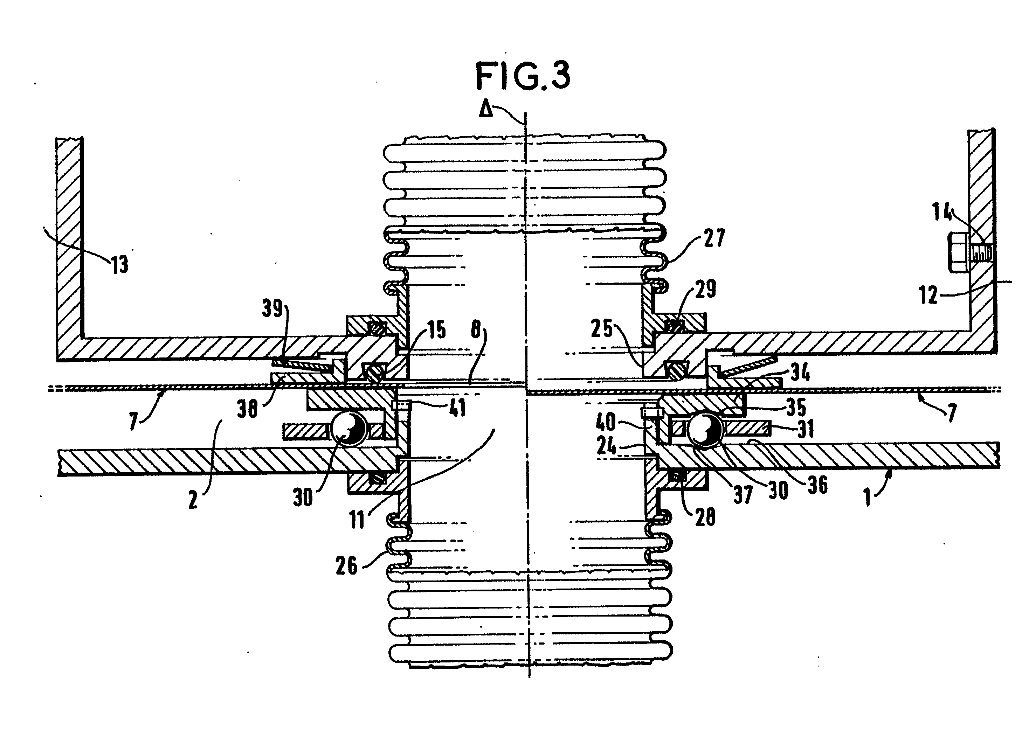

Sur la figure 3, les tambours 9 et 10 ne sont pas représentés et les chambres 12 et 13 ne sont qu'amorcées. Sur cette figure également, dans la demi-partie de gauche, la vanne est représentée en position ouverte et avec le système de joint appliqué, assurant l'étanchéité interne de la vanne et dans la demi-partie de droite, le système de joint est desserré et la bande d'obturation 7 a été déplacée en position d'obturation du conduit 11, le joint doit ensuite être resserré.

Le fonctionnement est le suivant :

Au cours du pompage, la bande d'obturation 7 est placée de telle sorte que son ouverture 8 soit coaxiale à l'axe Δ. Si l'on souhaite l'étanchéité interne de la vanne, on applique le système de joint mobile en tirant sur la tige de manoeuvre 33.

Pour fermer la vanne, on libère le pincement de la bande d'obturation 7 si le système de joint mobile était appliqué, et on déplace la bande 7 par la rotation motrice du tambour 10 jusqu'à ce que l'ouverture 8 soit complètement hors de la superficie intérieure du joint 15. On applique ensuite le joint mobile contre le joint fixe 15 par action sur le levier 33.

Dans la position représentée sur la moitié gauche de la figure 3, la vanne est ouverte et le système de joint serré, assurant l'étanchéité interne de la vanne, ce qui permet d'éviter le dégazage des compartiments 12 et 13. Par ailleurs, l'orifice 14, lorsque le système de joint est serré, permet de pomper séparément ces compartiments 12 et 13 de façon à avoir un vide absolument propre et d'éviter des remontées de pression significatives lors des déplacements de la bande d'obturation 7.

**Revendications**

1/ Vanne pour enceinte à vide comprenant un corps de vanne (1), creux d'axe Δ, et débouchant à l'extérieur par deux extrémités opposées (24, 25) du corps de vanne, permettant de l'introduire dans un circuit de pompage, ledit corps de vanne étant muni en son intérieur d'un moyen d'obturation constitué par une bande (7), mobile dans son propre plan, qui est perpendiculaire à l'axe Δ, ladite bande étant munie d'au moins une ouverture (8) et étant associée à deux tambours d'enroulement-déroulement (9, 10) munis de moyens moteurs, caractérisée en ce que ledit corps de vanne est en outre muni de moyens d'étanchéité situés entre les deux tambours et comprenant un joint fixe (15) solidaire du corps de vanne et situé d'un premier côté par rapport à la bande et d'un système de joint mobile parallèlement à l'axe Δ, situé de l'autre côté de la bande par rapport au joint fixe, et ledit système de joint mobile comprend une pluralité de billes (30) maintenues espacées les unes des autres sur une circonférence par une cage (31) mobile en rotation, l'ensemble billes et cage étant disposé entre un anneau de serrage (34) mobile axialement et muni d'empreintes coniques (35) pour les billes et une partie plane (36) du corps de vanne munie également d'empreintes coniques (37) pour les billes, ladite cage (31) étant associée à des moyens (32, 33) permettant de l'entraîner en rotation d'un angle α, l'anneau de serrage étant mobile par coulissement axial d'une manière étanche le long d'une portée cylindrique (40) interne audit corps de vanne.

2/ Vanne selon la revendication 1, caractérisée en ce que le corps de vanne comprend, situé du même côté que ledit joint fixe par rapport à la bande, un anneau de rappel (38) soumis à l'effort d'un ressort de rappel (39) dirigé vers ladite bande.

## Patentansprüche

1. Ventil für einen Vakuumbehälter, das einen hohlen Ventilkörper (1) mit der Achse Δ aufweist und über zwei einander gegenüberliegende Enden (24, 25) des Ventilkörpers nach außen mündet, so daß es in einen Pumpkreislauf eingefügt werden kann, wobei der Ventilkörper in seinem Inneren mit einem Verschlußorgan ausgestattet ist, das aus einem in seiner eigenen Ebene bewegbaren, senkrecht zur Achse Δ verlaufenden Band (7) besteht, und das Band mindestens eine Öffnung (8) aufweist und mit einer Aufwickel- und einer Abwickeltrommel (9, 10) verbunden ist, die mit Antriebsmitteln versehen sind, dadurch gekennzeichnet, daß der Ventilkörper weiter mit Dichtmitteln zwischen den beiden Trommeln ausgerüstet ist, die eine mit dem Ventilkörper fest verbundene und auf einer ersten Bandseite liegende ortsfeste Dichtung (15) sowie ein auf der gegenüberliegenden Bandseite liegendes und parallel zur Achse Δ bewegliches Dichtsystem aufweist, wobei das bewegliche Dichtungssystem eine Vielzahl von Kugeln (30) enthält, die untereinander durch einen drehbeweglichen Käfig (31) auf einer Kreislinie auf Abstand gehalten werden, wobei Kugeln und Käfig zwischen einem axial beweglichen Spannring (34), der mit konischen Vertiefungen (35) für die Kugeln versehen ist, und einem flachen Abschnitt (36) des Ventilkörpers, ebenfalls mit konischen Vertiefungen (37) für die Kugeln, angeordnet sind, und wobei der Käfig (31) mit Mitteln (32, 33) zusammenwirkt, durch die er um einen Winkel α gedreht werden kann, während der Spannring durch Axialverschiebung entlang einer zylindrischen Bahn (40) im Inneren des Ventilkörpers unter Wahrung der Dichtheit bewegbar ist.

2. Ventil nach Anspruch 1, dadurch gekennzeichnet, daß der Ventilkörper auf der gleichen Bandseite, auf der sich die feststehende Dichtung befindet, einen Rückholring (38) aufweist, der der Wirkung einer zum Band hin drückenden Rückholfeder (39) ausgesetzt ist.

## Claims

1. A valve for a vacuum enclosure, the valve comprising a valve body (1) which is hollow and presents an axis Δ and which opens out to the outside via two opposite end openings (24, 25) of the valve body, thereby enabling the valve to be inserted in a pumping circuit, the inside of said valve body being provided with closure means constituted by a strip (7) which is movable in its own plane, which plane extends perpendicularly to the axis Δ, said strip being provided with at least one opening (8) and being associated with take-up and pay-out drums (9, 10) provided with drive means, said valve being characterized in that the valve body is further provided with sealing means situated between the two drums and comprising a fixed gasket (15) fixed to the valve body and situated on a first side of the strip, and a moving gasket system capable of moving parallel to the axis Δ and situated on the other side of the strip with respect to the fixed gasket, and that said moving gasket system includes a plurality of balls (30) which are held spaced apart from one another along a circumference by means of a rotatable cage (31), the ball and cage assembly being disposed between a clamping ring (34) which is axially displacable and which is provided with conical depressions (35) for receiving the balls and a plane portion (36) of the valve body which is also provided with conical depressions (37) for receiving the balls, said cage (31) being associated with means (32, 33), enabling it to be rotated through an angle α, the clamping ring being axially slideable in sealed manner along a cylindrical bearing surface (40) inside said valve body.

2. A valve according to claim 1, characterized in that the valve body includes a return ring (38) situated on the same side of the strip as said fixed gasket and subjected to the force of a return spring (39) urging towards said strip.

# FIG.1

# FIG.2

FIG.3